# EUROPÄISCHE PATENTANMELDUNG

(11) **EP 2 337 115 A2**
(43) Veröffentlichungstag der Anmeldung: **22.06.2011**
(21) Anmeldenummer: 10015419.4
(22) Anmeldetag: 08.12.2010
(51) Int. Cl.: H01M 2/20, H01R 11/28, H01M 2/06

(54) **Busbarplatte**

(30) Priorität: 16.12.2009 DE 102009058632
(71) Anmelder: Carl Freudenberg KG, 69469 Weinheim (DE)
(72) Erfinder: Zischka, Helmut, 71287 Weissach (DE); Kritzer, Peter, 67147 Forst (DE)

(57) **Zusammenfassung**

Eine Busbarplatte (1) für eine Batterie mit einzelnen Zellen (2), umfassend eine Grundplatte (3) aus einem polymeren Material und Stromschienen (4) zur Kontaktierung von Polanschlüssen (5) der Zellen (2), wobei der Grundplatte (3) eine Lage (6) zur Verbindung der Stromschienen (4) mit einer Überwachungselektronik (7) zugeordnet ist, ist im Hinblick auf die Aufgabe, eine betriebstaugliche Busbarplatte anzugeben, welche eine mechanisch stabile und zuverlässige Kontaktierung der Zellen einer Batterie erlaubt, **dadurch gekennzeichnet, dass** die Lage (6) ein Kontaktierungselement (8) zur elektrischen Verbindung mit einer Stromschiene (4) aufweist, wobei das Kontaktierungselement (8) mit einem ersten Ende (9) an der Lage (6) festgelegt ist und wobei vom ersten Ende (9) ein flexibel deformierbares Verbindungsstück (10) abragt.

## Beschreibung

### Technisches Gebiet

Die Erfindung betrifft eine Busbarplatte für eine Batterie mit einzelnen Zellen, umfassend eine Grundplatte aus einem polymeren Material und Stromschienen zur Kontaktierung von Polanschlüssen der Zellen, wobei der Grundplatte eine Lage zur Verbindung der Stromschienen mit einer Überwachungselektronik zugeordnet ist.

### Stand der Technik

Batterien bzw. elektrochemische Energiespeicher für Elektro- bzw. Hybridfahrzeuge bestehen typischerweise aus mehreren hundert einzelnen Zellen, die in einem Batteriegehäuse platziert sind. Hierbei ist eine Unterteilung in Module möglich. Gängige Batterietechnologien umfassen Nickel-Metallhydrid- bzw. Lithium-basierte Systeme. Daneben kommen Superkondensatoren zum Einsatz. Ein Batteriegehäuse hat dabei mehrere Funktionen. Es soll einen Schutz der einzelnen Zellen nach außen gewährleisten. Insbesondere soll es einen Schutz vor Feuchtigkeit, vor Vibrationen und Schlägen bieten.

Die einzelnen Zellen weisen Polanschlüsse auf, die mit Stromschienen, den sogenannten Busbars, verbunden werden, um eine Reihenschaltung herzustellen. Zur Herstellung der Reihenschaltung werden Polanschlüsse je zweier Zellen miteinander verbunden.

Vor diesem Hintergrund hat eine Busbarplatte mehrere Aufgaben. Sie soll die Kontaktierung der Leistungselektronik der Zellen herstellen, wobei Spannungen U bis ca. 300 V und Ströme I bis 500 A auftreten. Sobald einer der Kontakte der Leistungselektronik ausfällt, kann die komplette Batterie unbrauchbar werden. Insbesondere ein Elektroauto würde dann stehen bleiben. Aufgrund der hohen Spannungen und Energiegehalte kann eine Schädigung der Kontakte häufig nicht rasch behoben werden.

Die Busbarplatte soll auch die Kontaktierung einer Überwachungselektronik, welche die einzelnen Zellen im Hinblick auf Lade- und Entladeströme, Ladezustand und Temperatur überwacht, herstellen. Diese Überwachung ist notwendig, um eine Leistungsfähigkeit der Batterie während deren gesamter Lebensdauer zu garantieren. Diese Leistungsfähigkeit hängt von der schwächsten Zelle ab. Insbesondere bei Lithium-basierten Zellen ist ein Ausfall einzelner Zellen besonders kritisch, da solche Zellen, insbesondere bei Überladung mit starken Strömen, Ursache von Bränden und/ oder Explosionen sein können. Fällt die Überwachungselektronik aus, wird die Batterie aus sicherheitstechnischen Gründen abgeschaltet.

Alle Kontaktierungen müssen automobiltauglich sein, insbesondere die Norm TS 16949 erfüllen. Sie müssen sicher gegen Vibrationen sein, Temperaturschwankungen beschädigungsfrei aushalten und mechanischen Verschiebungen durch Volumenarbeit bei flexiblen Zellen Stand halten. Zellen mit flexiblen Hüllen, sogenannte "Coffee-Bag-Zellen", dehnen sich beim Laden aus. Typisch sind hier Dickenänderungen zwischen ge- und entladenem Zustand von ca. 5 %.

Derzeit existieren Busbarplatten mit einer elastomeren Grundplatte. Die Flexibilität der elastomeren Grundplatte erlaubt in nachteiliger Weise eine Kraftbeaufschlagung der Lötstellen eines flexiblen Flachleiters der Überwachungselektronik mit den Stromschienen. Ein Ausweichen der Lötstellen in der Ebene oder in vertikaler Richtung, um Toleranzen auszugleichen, ist nahezu nicht möglich. Hier kann es zu Bruchstellen an den Lötstellen kommen.

### Darstellung der Erfindung

Der Erfindung liegt daher die Aufgabe zugrunde, eine betriebstaugliche Busbarplatte anzugeben, welche eine mechanisch stabile und zuverlässige Kontaktierung der Zellen einer Batterie erlaubt.

Die vorliegende Erfindung löst die zuvor genannte Aufgabe durch eine Busbarplatte mit den Merkmalen des Patentanspruchs 1.

Danach ist die eingangs genannte Busbarplatte bzw. Stromschienenplatte **dadurch gekennzeichnet, dass** die Lage ein Kontaktierungselement zur elektrischen Verbindung mit einer Stromschiene aufweist, wobei das Kontaktierungselement mit einem ersten Ende an der Lage festgelegt ist und wobei vom ersten Ende ein flexibel deformierbares Verbindungsstück abragt.

Erfindungsgemäß ist zunächst erkannt worden, dass unabhängig von der Wahl des Materials der Grundplatte problemlos dauerhafte elektrische Kontakte erzeugt werden können. Weiter ist erkannt worden, dass die Grundplatte aus einem weichen, aber auch aus einem sehr stabilen weitgehend unflexiblen Material gefertigt werden kann, ohne den Bruch von Kontaktstellen befürchten zu müssen. Durch das Kontaktierungselement kann die Überwachungselektronik mit den Polanschlüssen der Zellen problemlos verbunden werden. Schließlich ist erkannt worden, dass das flexible Verbindungsstück zerstörungsfrei deformierbar ist und Bewegungen und Toleranzen ausgleichen kann, ohne dass der elektrische Kontakt zwischen einer Zelle und der Überwachungselektronik zerstört wird. Insoweit ist eine betriebstaugliche Busbarplatte angegeben, welche eine mechanisch stabile und zuverlässige Kontaktierung der Zellen einer Batterie erlaubt.

Folglich ist die eingangs genannte Aufgabe gelöst.

Das Kontaktierungselement könnte mit einem Crimpanschluss an der Lage festgelegt sein. Ein Crimpansehluss kann rasch, maschinell und mechanisch ohne Verwendung von Klebstoffen realisiert werden.

Das flexibel deformierbare Verbindungsstück könnte als federnder Streifen ausgebildet sein. Durch seine mäanderförmige Ausgestaltung kann das Verbindungsstück leicht federn und zerstörungsfrei geringfügig gezogen werden. Vor diesem Hintergrund ist auch denkbar, das Verbindungsstück schlangenlinienförmig, hufeisenförmig oder zick-zack-förmig auszugestalten.

Das Kontaktierungselement könnte ein zweites Ende aufweisen, welchem ein Teller zur Verschweissung mit einer Stromschiene der Leistungselektronik zugeordnet ist. Hierdurch kann eine flächige Anlage des Kontaktierungselements an eine Stromschiene der Leistungselektronik erfolgen. Bei der Verschweissung wird das Zellinnere nicht geschädigt, da der Teller dessen thermische Isolierung realisiert.

Die Lage könnte als flexibler Flachleiter ausgestaltet sein. Ein flexibler Flachleiter oder eine Folie kann mit Leiterbahnen bedruckt oder geätzt werden und problemlos auf die Grundplatte aufgeklebt werden. Vor diesem Hintergrund ist denkbar, dass die Lage als sogenannter "Flexible Printed Circuit" ausgestaltet ist.

Die Grundplatte könnte zwischen der Lage und einer Dichtungsplatte aufgenommen sein, wobei in der Lage, in der Grundplatte und in der Dichtungsplatte Durchgänge für die Polanschlüsse der Zellen ausgebildet sind und wobei die Durchgänge zumindest teilweise miteinander fluchten. Hierdurch können Polanschlüsse zumindest teilweise durch die Busbarplatte hindurchragen und mit den Stromschienen verschraubt werden. Die Dichtungsplatte kann aus einem Elastomer oder aus Polyamid, aus einem Thermoplasten, einem Duroplasten oder einer Keramik gefertigt sein. Die Dichtungsplatte schützt das Innere eines Batteriegehäuses vor Schmutz und Spritzwasser.

Die Durchgänge der Dichtungsplatte könnten jeweils von einem elastischen Dichtungselement umgeben sein. Die Dichtungselemente könnten als O-Ringe oder eingespritzte Elastomere ausgestaltet sein. Hierdurch wird ein Ausgleich von Fertigungstoleranzen in der Ebene und in vertikaler Richtung kompensiert. Des Weiteren wird den unterschiedlichen Wärmeausdehnungsverhalten der Grundplatte und der Zellen Rechnung getragen. Weiter erfolgt ein Ausgleich von Toleranzen bei Bewegungen der Zellen, insbesondere bei Volumenarbeit der Zellen. Schließlich werden Stöße abgefedert. Die Busbarplatte soll die Überwachungselektronik und die Leistungselektronik abschirmen, welche die Stromschienen umfasst. Des Weiteren sollen die Polanschlüsse der Zellen abgedichtet werden.

Die Grundplatte könnte aus einem elektrisch nichtleltenden, steifen Material gefertigt sein. Ein steifes Material schont die Polanschlüsse der Zellen vor Verbiegungen. Hierbei ist denkbar dass das Material als Polyamid, als Thermoplast, Duroplast oder Keramik ausgestaltet ist.

Eine Anordnung könnte eine Busbarplatte der hier beschriebenen Art und mehrere Zellen mit Polanschlüssen umfassen, die mit einer Überwachungselektronik in elektrisch leitender Verbindung stehen.

Optional soll die Busbarplatte eine Kühlung der Zellen mittels einer Kontaktkühlung über die Kontakte der Leistungselektronik realisieren, welche die Stromschienen umfasst.

Es gibt nun verschiedene Möglichkeiten, die Lehre der vorliegenden Erfindung in vorteilhafter Weise auszugestalten und weiter zu bilden. Dazu ist einerseits auf die nachgeordneten Ansprüche, andererseits auf die nachfolgende Erläuterung eines bevorzugten Ausführungsbeispiels der erfindungsgemäßen Busbarplatte anhand der Zeichnung zu verweisen.

In Verbindung mit der Erläuterung des bevorzugten Ausführungsbeispiels anhand der Zeichnung, werden auch im Allgemeinen bevorzugte Ausgestaltungen und Weiterbildungen der Lehre erläutert.

### Kurzbeschreibung der Zeichnung

In der Zeichnung zeigen
- Fig. 1: eine Schnittansicht einer Busbarplatte und
- Fig. 2: eine perspektivische Ansicht des in Fig. 1 strichliert dargestellten Bereichs in Richtung des Pfeils, wobei konkret eine Ansicht auf den flexiblen Flachleiter von unten gezeigt ist.

### Ausführung der Erfindung

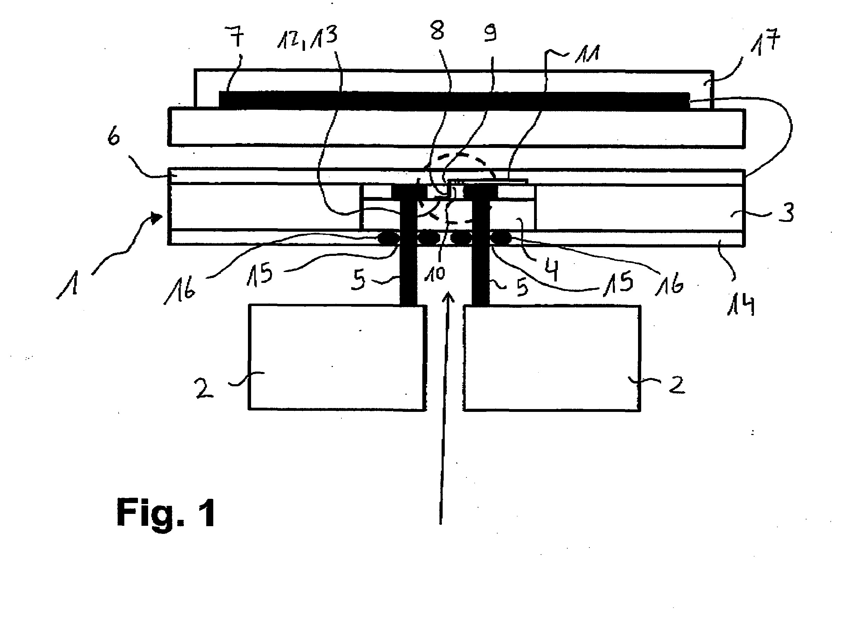

Fig. 1 zeigt eine Busbarplatte 1 für eine Batterie mit einzelnen Zellen 2, umfassend eine Grundplatte 3 aus einem polymeren Material und Stromschienen 4 zur Kontaktierung von Polanschlüssen 5 der Zellen 2, wobei der Grundplatte 3 eine Lage 6 zur Verbindung der Stromschienen 4 mit einer Überwachungselektronik 7 zugeordnet ist.

Die Lage 6 weist ein Kontaktierungselement 8 zur elektrischen Verbindung mit einer Stromschiene 4 auf, wobei das Kontaktierungselement 8 mit einem ersten Ende 9 an der Lage 6 festgelegt ist und wobei vom ersten Ende 9 ein flexibel deformierbares Verbindungsstück 10 abragt.

Das Kontaktierungselement 8 ist mit einem Crimpanschluss 11 an der Lage 6 festgelegt. Das flexibel deformierbare Verbindungsstück 10 ist als mäanderförmiger, federnder Streifen ausgebildet. Das Kontaktierungselement 8 weist ein zweites Ende 12 auf, welchem ein Teller 13 zur Verschweissung mit der Stromschiene 4 zugeordnet ist.

Die Lage 6 ist als flexibler Flachleiter ausgestaltet. Die Grundplatte 3 ist zwischen der Lage 6 und einer Dichtungsplatte 14 aufgenommen, wobei in der Lage 6, in der Grundplatte 3 und in der Dichtungsplatte 14 Durchgänge 15 für die Polanschlüsse 5 der Zellen 2 ausgebildet sind und wobei die Durchgänge 15 zumindest teilweise fluchten. Die Durchgänge 15 der Dichtungsplatte 14 sind jeweils von einem elastischen Dichtungselement 16 umgeben. Die Grundplatte 3 ist aus einem elektrisch nichtleitenden, steifen Material gefertigt.

Fig. 1 zeigt konkret eine Anordnung, die eine Busbarplatte 1 und mehrere Zellen 2 mit Polanschlüssen 5 umfasst. Die Polanschlüsse 5 stehen mit der Überwachungselektronik 7 in elektrisch leitender Verbindung und können hierdurch im Hinblick auf ihre Leistungsdaten überwacht werden. Die Überwachungselektronik 7 ist in einem Deckel 17 untergebracht, der auf die Busbarplatte 1 aufsetzbar ist. Die Überwachungselektronik 7 ist durch einen flexibel deformierbaren Leiterschwanz 18 mit der Lage 6 elektrisch leitend verbunden.

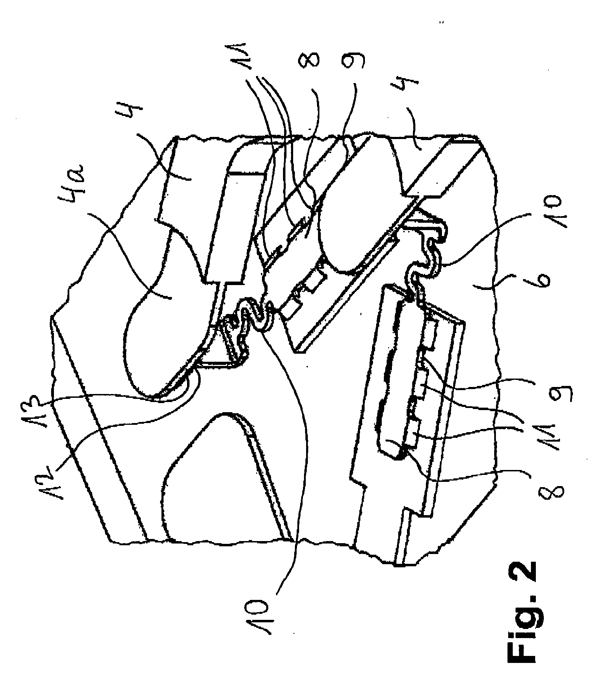

Fig. 2 zeigt eine perspektivische Ansicht der in Fig. 1 strichliert dargestellten Kontaktierungsstelle in Richtung des Pfeils, wobei Fig. 2 eine Ansicht der Lage 6 von unten darstellt.

Die Lage 6 weist ein Kontaktierungselement 8 zur elektrischen Verbindung mit einer Stromschiene 4 auf, wobei das Kontaktierungselement 8 mit einem ersten Ende 9 an der Lage 6 festgelegt ist und wobei vom ersten Ende 9 ein flexibel deformierbares Verbindungsstück 10 abragt. Das Kontaktierungselement 8 ist mit einem Crimpanschluss 11 an der Lage 6 festgelegt. Das flexibel deformierbare Verbindungsstück 10 ist als mäanderförmiger, federnder Streifen ausgebildet. In Fig. 2 ist der Streifen schlangenlinienförmig dargestellt.

Das Kontaktierungselement 8 weist ein zweites Ende 12 auf, welchem ein Teller 13 zur Verschweissung mit der Stromschiene 4 zugeordnet ist. An der Stromschiene 4 ist ein Anschweissflansch 4a ausgebildet, mit dem das Kontaktierungselement 8 verschweisst ist. Die Lage 6 ist als flexibler Flachleiter, nämlich "Flexible Printed Circuit" ausgestaltet.

Hinsichtlich weiterer vorteilhafter Ausgestaltungen und Weiterbildungen der erfindungsgemäßen Lehre wird einerseits auf den allgemeinen Teil der Beschreibung und andererseits auf die beigefügten Patentansprüche verwiesen.

## Patentansprüche

1. Busbarplatte (1) für eine Batterie mit einzelnen Zellen (2), umfassend eine Grundplatte (3) aus einem polymeren Material und Stromschienen (4) zur Kontaktierung von Polanschlüssen (5) der Zellen (2), wobei der Grundplatte (3) eine Lage (6) zur Verbindung der Stromschienen (4) mit einer Überwachungselektronik (7) zugeordnet ist,
**dadurch gekennzeichnet, dass** die Lage (6) ein Kontaktierungselement (8) zur elektrischen Verbindung mit einer Stromschiene (4) aufweist, wobei das Kontaktierungselement (8) mit einem ersten Ende (9) an der Lage (6) festgelegt ist und wobei vom ersten Ende (9) ein flexibel deformierbares Verbindungsstück (10) abragt

2. Busbarplatte nach Anspruch 1, **dadurch gekennzeichnet, dass** das Kontaktierungselement (8) mit einem Crimpanschluss (11) an der Lage (6) festgelegt ist.

3. Busbarplatte nach Anspruch 1 oder 2, **dadurch gekennzeichnet, dass** das flexibel deformierbare Verbindungsstück (10) als federnder Streifen ausgebildet ist.

4. Busbarplatte nach einem der Ansprüche 1 bis 3, **dadurch gekennzeichnet, dass** das Kontaktierungselement (8) ein zweites Ende (12) aufweist, welchem ein Teller (13) zur Verschweissung mit der Stromschiene (4) zugeordnet ist

5. Busbarplatte nach einem der Ansprüche 1 bis 4, **dadurch gekennzeichnet, dass** die Lage (6) als flexibler Flachleiter ausgestaltet ist.

6. Busbarplatte nach einem der Ansprüche 1 bis 5, **dadurch gekennzeichnet, dass** die Grundplatte (3) zwischen der Lage (6) und einer Dichtungsplatte (14) aufgenommen ist, wobei in der Lage (6), in der Grundplatte (3) und in der Dichtungsplatte (14) Durchgänge (15) für die Polanschlüsse (5) der Zellen (2) ausgebildet sind und wobei die Durchgänge (15) zumindest teilweise miteinander fluchten.

7. Busbarplatte nach Anspruch 6, **dadurch gekennzeichnet, dass** die Durchgänge (15) der Dichtungsplatte (14) jeweils von einem elastischen Dichtungselement (16) umgeben sind.

8. Busbarplatte nach einem der Ansprüche 1 bis 7, **dadurch gekennzeichnet, dass** die Grundplatte (3) aus einem elektrisch nichtleitenden, steifen Material gefertigt ist.

9. Anordnung, umfassend eine Busbarplatte (1) nach einem der voranstehenden Ansprüche und mehrere Zellen (2) mit Polanschlüssen (5), die mit einer Überwachungselektronik (7) in elektrisch leitender Verbindung stehen.
